**Europäisches Patentamt**

**European Patent Office**

**Office européen des brevets**

(19)

(11) Veröffentlichungsnummer : **0 372 203 B1**

# (12) EUROPÄISCHE PATENTSCHRIFT

(45) Veröffentlichungstag der Patentschrift :
**30.12.92 Patentblatt 92/53**

(51) Int. Cl.$^5$ : **B01D 29/05**, B01D 29/66, B01D 29/70, B01D 35/12, B29C 47/68

(21) Anmeldenummer : **89119563.8**

(22) Anmeldetag : **21.10.89**

(54) **Filtereinrichtung für Strangpressen und Spritzgiessmaschinen.**

(30) Priorität : **05.12.88 DE 3840904**

(43) Veröffentlichungstag der Anmeldung :
**13.06.90 Patentblatt 90/24**

(45) Bekanntmachung des Hinweises auf die Patenterteilung :
**30.12.92 Patentblatt 92/53**

(84) Benannte Vertragsstaaten :
**AT CH DE ES GB IT LI**

(56) Entgegenhaltungen :
**EP-A- 0 048 973**
**EP-A- 0 250 695**
**EP-A- 0 270 501**

(73) Patentinhaber : **KREYENBORG VERWALTUNGEN UND BETEILIGUNGEN KG COERMÜHLE**
**W-4400 Münster-Kinderhaus (DE)**

(72) Erfinder : **Stude, Rolf-Rüdiger**
**Elbinger Strasse 16**
**W-4400 Münster (DE)**
Erfinder : **Wilken-Trenkamp, Ludger**
**Janningsweg 42**
**W-4400 Münster (DE)**

(74) Vertreter : **Habbel, Hans-Georg, Dipl.-Ing.**
**Postfach 3429 Am Kanonengraben 11**
**W-4400 Münster (DE)**

EP 0 372 203 B1

**Beschreibung**

Die Erfindung bezieht sich auf eine Filtereinrichtung gemäß dem Oberbegriff des Patentanspruches.

Eine gattungsbildende Filtereinrichtung wird in der EP-A-0 250 695 beschrieben, bei welcher in jedem Siebbolzen ein mit dem Austrittskanal des in diesem Siebbolzen vorgesehenen Siebes in Verbindung stehender Spülkanal vorgesehen ist, der bei einer Verschiebung des Siebbolzens in eine Spülstellung mit dem Auslaßkanal verbindbar ist, wobei in dieser Spülstellung des Siebbolzens die Schmutzsiebseite des Siebes zumindest teilweise mit einem die Siebverunreinigungen aufnehmenden Raum in Verbindung steht bzw. ins Freie offen ist.

Bei der bekannten Anordnung wird zwar ein Freispülen der Schmutzsiebseite durch von der Reinsiebseite her durch das Sieb gepreßten Kunststoff erreicht, aber mit dem Nachteil, daß während des Normalbetriebes des Siebbolzens der Spülkanal vom Fluß des Kunststoffes abgetrennt ist, so daß während der gesamten Arbeitszeit dieser Spülkanal in dem hocherhitzten Siebbolzen voll Kunststoff steht, so daß es hier zu Verkrackungen des Materials kommen muß. Dieses zersetzte und verkrackte Material wird dann in der Spülstellung auf die Reinsiebseite geführt, so daß einerseits ein Abspülen der Siebverunreinigungen auf der Schmutzsiebseite des Siebes erreicht wird, andererseits aber der Raum auf der Reinsiebseite mit verkracktem Kunststoff aufgefüllt wird, das im nächsten Arbeitsgang des Siebbolzens dann in den Auslaßkanal und damit zum Fertigprodukt gelangt.

Der Erfindung liegt die Aufgabe zugrunde, ausgehend von dem gattungsbildenden Stand der Technik, eine Anordnung der Spülkanäle so zu schaffen, daß sichergestellt wird, daß innerhalb des Siebbolzens auch im Spülkanal während des normalen Arbeitsbetriebes stets Kunststoff fließt, d. h. bewegt wird, so daß ein Verkracken von Kunststoff im Spülkanal ausgeschaltet ist.

Diese der Erfindung zugrundeliegende Aufgabe wird durch die Lehre des Patentanspruches gelöst.

Mit anderen Worten ausgedrückt, wird gemäß der Erfindung so vorgegangen, daß der Spülkanal dann, wenn er nicht den Spülzwecken dient, von der Reinsiebseite des Siebes her mit Kunststoff beschickt wird und dieser Kunststoff dann über einen Parallelspülkanal parallel zum Teilkanal zum Austrittskanal fördert. Ein Verkracken ist während der Produktionszeit des Siebes also nicht möglich.

Zum Zwecke der Spülstellung wird der dann zu reinigende Siebbolzen etwas verschoben, so daß der Zustrom zum Siebraum vom Eintrittskanal her unterbrochen wird, andererseits aber der in diesem Siebbolzen vorgesehene Spülkanal nunmehr mit dem diesem Siebbolzen zugeordneten Teilkanal in Verbindung Steht, so daß der durch diesen Teilkanal über den Spülkanal zur Reinsiebseite strömende Kunststoff nunmehr das Sieb dieses zu reinigenden Siebbolzens von der Reinsiebseite her durchströmt, dabei die Schmutzpartikel auf der Schmutzsiebseite mitnimmt und durch einen Abfuhrkanal abführt. Sobald dieser Siebbolzen wieder in Betrieb genommen wird, wird der eigentliche Spülkanal in umgekehrter Richtung von Kunststoff durchströmt, so daß jede Verkrackungserscheinung ausgeschaltet ist.

Ein Ausführungsbeispiel der Erfindung wird nachfolgend anhand der Zeichnungen erläutert. Die Zeichnungen zeigen dabei in

Fig. 1 schaubildlich und relativ schematisch ein Teil eines Gehäuses mit zwei Siebbolzen, wobei der eine Siebbolzen in der Arbeitsstellung und der andere Siebbolzen in der Spülstellung steht, in

Fig. 2 in gleichem Maßstab einen der beiden Siebbolzen und in

Fig. 3 in gleichem Maßstab das Gehäuse mit herausgenommenen Siebbolzen.

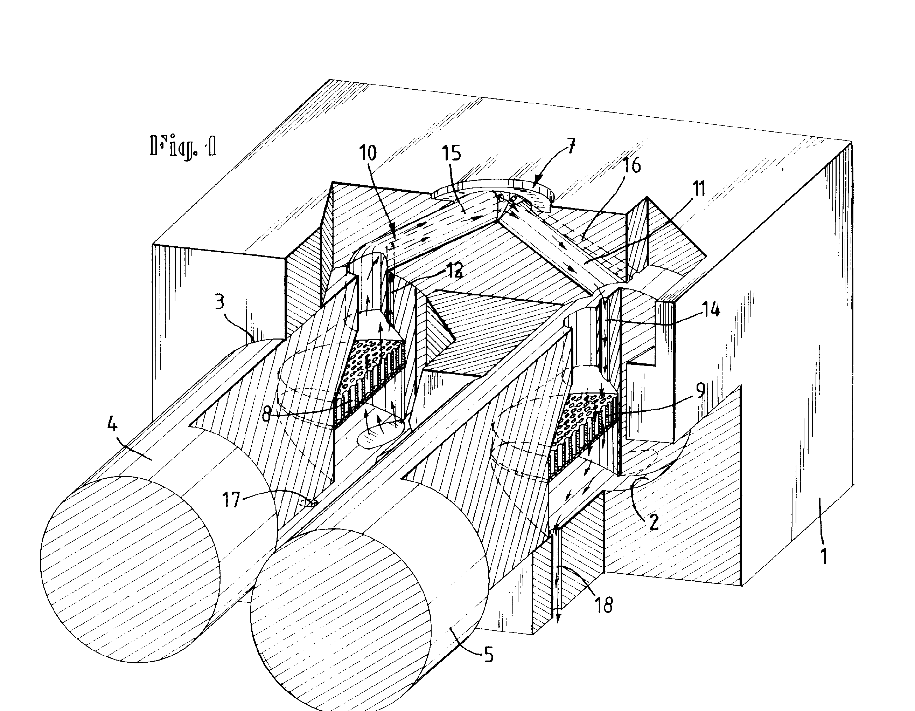

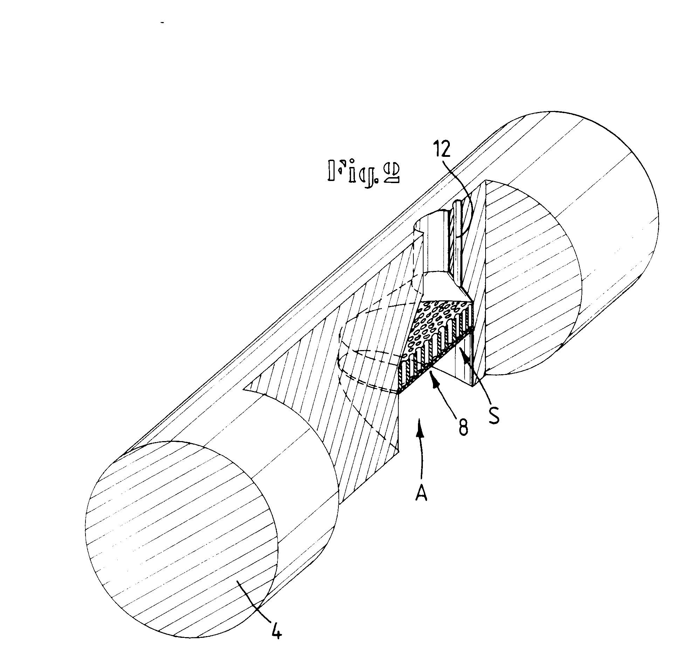

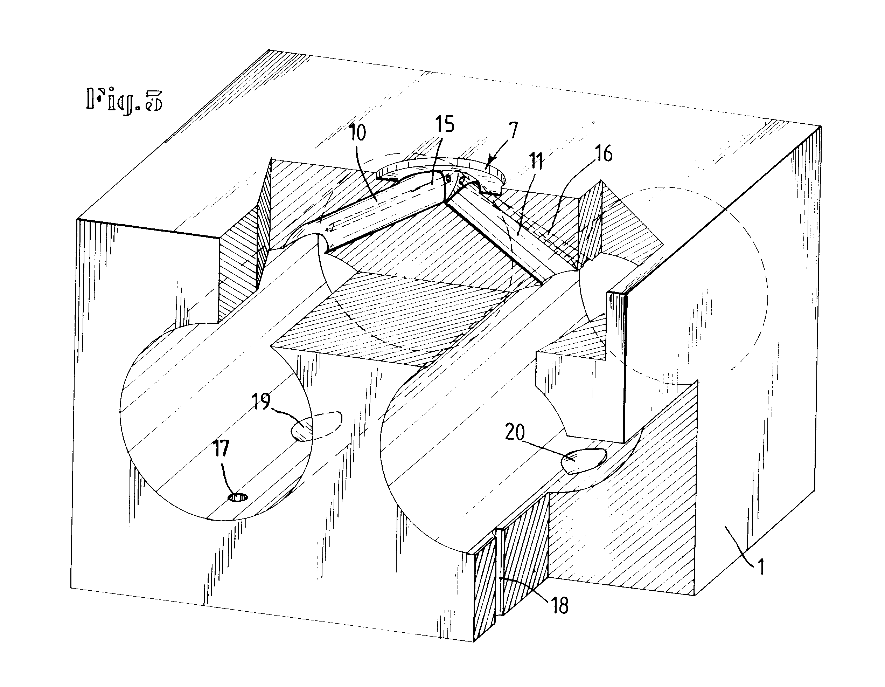

In den Zeichnungen ist ein Gehäuse 1 dargestellt, das zwei Gehäusebohrungen 2 und 3 aufweist, in denen Siebbolzen 4 und 5 in an sich bekannter Weise saugend dicht und über entsprechende hydraulische Druckvorrichtungen angetrieben verstellbar angeordnet sind. Jeder Siebbolzen weist einen Siebraum A auf (der in Fig. 2 deutlich erkennbar ist) und in jedem Siebraum A ist eine Siebstützplatte und ein Sieb angeordnet, wobei diese Gesamtheit mit 8 und 9 bezeichnet ist. Zu jedem Siebraum A führen ausgehend von einem in der Zeichnung nicht dargestellten Eintrittskanal aus Teilkanäle, die in der Zeichnung nicht dargestellt sind, deren Mündung 19, 20 im Bereich des Siebraumes A aber in Fig. 1 und 3 erkennbar ist. Nach Durchströmen des eigentlichen Siebes 8 bzw. 9 führen dann Teilkanäle 10 bzw. 11 zu einem Austrittskanal 7. Soweit ist diese Einrichtung bekannt und durch Verstellen der Siebbolzen 4, 5 können die Mündungen der zum Eintrittskanal führenden Teilkanäle verschlossen werden, so daß ein problemloses Auswechseln der Siebe bzw. Siebpakete nach entsprechendem Ausfahren der Siebbolzen möglich ist.

Um das der Erfindung zugrundeliegende Problem zu lösen, sind Spülkanäle 12, 14 vorgesehen, die einenendes auf der Reinsiebseite R (Fig. 2) der Siebe 8 und 9 münden und andererseits über einen Parallelspülkanal 15 bzw. 16 mit dem Austrittskanal 7 in Verbindung stehen.

Weiterhin sind in dem Gehäuse 1 Abfuhrkanäle 17 und 18 ausgebildet, die in ihrer Stellung so angeordnet sind, daß beim normalen Betrieb des Siebbolzens (gemäß Fig. 1 in der Betriebsstellung des Siebbolzens 4) der Abfuhrkanal 17 verschlossen ist, daß aber in der Spülstellung, die in Fig. 1 für den Siebbolzen 5 dargestellt ist, dieser Abfuhrkanal 18 mit der Schmutzsiebseite S (Fig. 2) des Siebes 9 in Verbindung steht.

Die Arbeitsweise dieser Einrichtung ist wie folgt:

In Fig. 1 befindet sich der Siebbolzen 4 in der Arbeitsstellung und der Spülkanal 12 mündet auf der Reinsiebseite R̲ des in dem Siebraum A̲ angeordneten Siebes 8. Der durch das Sieb hindurchgeführte Kunststoff strömt sowohl über den Teilkanal 10 wie auch durch den Spülkanal 12 und den Parallelspülkanal 15 zum Austrittskanal 7. Während des Betriebes des Siebbolzens 4 erfolgt also ständig eine Spülung des Spülkanales 12 mit gesiebtem Kunststoff, der durch den Austrittskanal 7 abgeführt wird. Wird nunmehr der Siebbolzen 5 in die Spülstellung geführt, die in Fig. 1 dargestellt ist, gelangt der Spülkanal 14 mit der Mündung des Teilkanales 11 in Verbindung und über diesen Teilkanal 11 fließt nunmehr Kunststoff durch den Spülkanal 14 auf die Reinsiebseite R̲ des Siebes 9, durchströmt das Sieb bzw. das Siebpaket und führt an der Schmutzsiebseite S̲ des Siebes 9 die sich dort angesammelten Schmutzpartikelchen zum Abfuhrkanal 18, von wo aus sie abgenommen werden. In dieser Stellung steht der Parallelspülkanal 16 zwar voll Kunststoff, der nicht bewegt wird, aber da das Gehäuse kälter als der Siebbolzen 4 oder 5 gehalten wird, kann ein Verkracken des Materials in diesem dann nicht benutzten Parallelspülkanal 16 nicht eintreten.

Zusammenfassend ist also festzustellen, daß durch die sinnvolle Anordnung von Spülkanal und Parallelspülkanal sowie Abfuhrkanal sichergestellt ist, daß während des Betriebes des Siebbolzens innerhalb des Spülkanales kein Kunststoff im Siebbolzen unbewegt steht und damit verkracken oder sich zersetzen kann, daß andererseits dieser Spülkanal leicht mit einem Teilkanal zu verbinden ist und damit zu einer Rückführung von Kunststoff auf die Reinsiebseite des jeweiligen Siebes beiträgt.

## Patentansprüche

1. Filtereinrichtung für Strangpressen und Spritzgießmaschinen zur kontinuierlichen Verarbeitung von thermoplastischen Kunststoffen mit in jeweils mindestens zwei getrennten Teilkanälen (10, 11) zwischen dem Eintrittskanal und dem Austrittskanal (7) eines Gehäuses (1) auswechselbar in Siebbolzen (4, 5) angeordneten Siebstützplatten mit Sieben (8, 9), die mit in Gehäusebohrungen (2, 3) saugend dicht angeordneten Siebbolzen (4, 5) in das Gehäuse (1) ein- und ausfahrbar sind, wobei in jedem Siebbolzen (4, 5) ein Spülkanal (12, 14) angeordnet ist, der einenendes auf der Reinsiebseite des zugeordneten Siebes (8, 9) mündet und anderenendes in den dem Siebbolzen (4, 5) zugeordneten Teilkanal (10, 11) und damit dem Austrittskanal (7) mündet, dadurch gekennzeichnet, daß
a) auf der Austrittskanal seite des Gehäuses (1) jedem Teilkanal (10, 11) ein Parallelspülkanal (15 bzw. 16) zugeordnet ist, der während der Produktionsstellung des Siebbolzens (4 bzw. 5) einenendes mit dem Spülkanal (12 bzw. 14) verbunden ist und anderenendes im Bereich des Austrittskanales (7) mündet,
b) jeder Gehäusebohrung (2, 3) im Gehäuse (1) ein Abfuhrkanal (17, 18) zugeordnet ist, der in der Arbeitsstellung des Siebes (8, 9) durch den Siebbolzen (4, 5) verschlossen ist, aber in einer Spülstellung mit der Schmutzsiebseite in Verbindung bringbar ist.

## Claims

1. Filter device for extruders and injection-moulding machines for the continuous processing of thermoplastics, having screen supporting plates with screens (8, 9), arranged exchangeably in cylindrical screening inserts (4, 5) in in each case at least two separate sub-channels (10, 11) between the inlet channel and the outlet channel (7) of a housing (1), which screen supporting plates can be moved into and out of the housing (1) by cylindrical screening inserts (4, 5) arranged suction-tight in housing bores (2, 3), there being arranged in each cylindrical screening insert (4, 5) a flushing channel (12, 14), which at one end opens out on the clean-screen side of the assigned screen (8, 9) and at the other end opens out into the sub-channel (10, 11) assigned to the cylindrical screening insert (4, 5), and consequently the outlet channel (7), characterised in that
a) on the outlet channel side of the housing (1), each sub-channel (10, 11) is assigned a parallel flushing channel (15 and 16 respectively), which during the production position of the cylindrical screening insert (4 or 5) is connected at one end to the flushing channel (12 and 14 respectively) and opens out at the other end in the region of the outlet channel (7),
b) each housing bore (2, 3) is assigned in the housing (1) a discharge channel (17, 18), which in the operating position of the screen (8, 9) is closed by the cylindrical screening insert (4, 5), but in a flushing position can be brought into connection with the soil-screen side.

## Revendications

1. Installation de filtrage pour extrudeuses et presses d'injection pour le traitement en continu de matières thermoplastiques avec des plaques porte-filtre pourvues de filtres (8, 9) disposées de manière interchangeable dans des porte-filtre (4, 5), chacune dans au moins deux canaux partiels (10, 11) séparés entre le canal d'entrée et le canal de sortie (7) d'un boîtier (1), qui peuvent être introduites et retirées du boîtier (1) avec des porte-filtre (4, 5) disposés dans des trous du boîtier (2, 3) avec une étanchéité par aspiration, un canal de rinçage (12, 14) étant disposé dans chaque porte-filtre (4, 5) et débouchant à une extrémité sur la face propre du filtre (8, 9) correspondant et à l'autre extrémité dans le canal partiel (10, 11) relié au porte-filtre (4, 5) et ainsi dans le canal de sortie (7), caractérisée en ce que :

    a) à chaque canal partiel (10, 11) est relié sur le côté du canal de sortie du boîtier (1) un canal de rinçage parallèle (15 ou 16), qui est relié par une extrémité au canal de rinçage (12 ou 14) pendant la position de production du porte-filtre (4 ou 5) et débouche par l'autre extrémité dans le secteur du canal de sortie (7),

    b) à chaque trou (2, 3) dans le boîtier (1) est relié un canal d'évacuation (17, 18) qui est fermé par le porte-filtre (4, 5) dans la position de service du filtre (8), mais peut être mis en relation avec la face du filtre portant les impuretés dans une position de rinçage.

Fig. 1

Fig. 2

Fig. 7